# EUROPÄISCHE PATENTSCHRIFT

(11) **EP 1 781 458 B1**
(45) Veröffentlichungstag und Bekanntmachung des Hinweises auf die Patenterteilung: **17.06.2009**
(21) Anmeldenummer: 05771992.4
(22) Anmeldetag: 05.08.2005
(51) Int. Cl.: B29C 45/17, F16C 29/02, B30B 15/04

(54) **SCHLIESSEINHEIT MIT EINER AUF EINEM RAHMENELEMENT HYDROSTATISCH GELAGERTEN AUFSPANNPLATTE**
CLOSING UNIT WITH A CLAMPING PLATE HYDROSTATICALLY MOUNTED ON A FRAME ELEMENT
UNITE DE FERMETURE COMPORTANT UNE PLAQUE DE FIXATION MONTEE DE MANIERE HYDROSTATIQUE SUR UN ELEMENT DE BATI

(30) Priorität: 19.08.2004 DE 102004040194
(43) Veröffentlichungstag der Anmeldung: 09.05.2007
(73) Patentinhaber: KraussMaffei Technologies GmbH, 80997 München (DE)
(72) Erfinder: WOHLRAB, Walter, 91781 Weissenburg (DE)
(74) Vertreter: Zollner, Richard
(86) Internationale Anmeldenummer: PCT/EP2005/053870
(87) Internationale Veröffentlichungsnummer: WO 2006/018400

(56) Entgegenhaltungen:
- EP-A- 1 375 121
- EP-A- 1 561 562
- DE-A1- 1 904 998
- DE-A1- 3 006 230
- US-A- 3 903 993
- US-A- 4 048 841
- US-A- 4 222 731
- PATENT ABSTRACTS OF JAPAN Bd. 2000, Nr. 20, 10. Juli 2001 (2001-07-10) -& JP 2001 079852 A (SONY DISC TECHNOLOGY INC), 27. März 2001 (2001-03-27)
- PATENT ABSTRACTS OF JAPAN Bd. 1998, Nr. 12, 31. Oktober 1998 (1998-10-31) -& JP 10 193388 A (EMOTO KOGYO KK; NITTO BOSEKI CO LTD), 28. Juli 1998 (1998-07-28)

## Beschreibung

Die Erfindung betrifft eine Schließeinheit gemäß dem Oberbegriff des Patentanspruchs 1 sowie ein Verfahren zum Betrieb einer solchen Schließeinheit.

Bei Schließeinheiten, insbesondere für Spritzgießmaschinen, sind in der Regel zwei Formaufspannplatten zur Aufnahme von Formwerkzeugen vorgesehen, wobei zumindest eine Formaufspannplatte beweglich auf einem Maschinenbett gelagert ist. Diese bewegliche Formaufspannplatte kann zum Schließen und Öffnen der Schließeinheit hin und her verfahren werden.

Herkömmlicherweise wird für die bewegliche Formaufspannplatte als Lagerung auf einem Rahmenelement eines Maschinenbetts ein Gleitlagerung mit einer hydrodynamischen Schmierung verwendet. Dies bedeutet, dass zwischen den Lagerelementen ein Schmiermittel eingebracht oder aufgetragen ist, und bei einer Gleitbewegung sich ein Schmierfilm zwischen den zu lagernden Elementen bildet. Beispielsweise kann das Schmiermittel über eine an sich bekannte Schmiernut eingebracht werden. Als Vertreter einer solchen an sich üblichen Lagerung kann die DE 196 02 738 genannt werden.

Nachteilig bei einer solchen, herkömmlichen hydrodynamischen Schmierung oder Lagerung ist der geschwindigkeitsabhängige Reibungskoeffizient. Die Reibung ist nämlich bei relativ hohen Geschwindigkeiten kleiner. Je niedriger die Geschwindigkeit wird, desto stärker nimmt die Reibung aufgrund einer möglichen Abnahme des Schmierfilmes in der Regel zu (Slip-stick-Effekt, Haftreibungseffekte). Dieser Effekt ist insbesondere dann von Nachteil, wenn man gegen Ende einer Schließbewegung sicherheitsrelevante Sachverhalte erfassen will. Solche sicherheitsrelevanten Sachverhalte können das Verklemmen eines nicht vollständig ausgeführten Produktes zwischen den beiden Formaufspannplatten oder das Hineinragen eines Fremdkörpers in die Schließeinheit bedeuten. Eine solche Problemsituation ist möglichst schnell und sensibel zu detektieren. Gerade bei der langsamen Endbewegung während des Schließvorgangs ist jedoch aufgrund der vergrößerten Reibung bisher ein größerer Kraftaufwand erforderlich, so dass die Sensibilität der Detektion von Fehlfunktionen nicht in ausreichendem Maße gewährleistet werden kann.

Eine gattungsgemäße Schließeinheit ist in der US 4,222,731 offenbart. Dabei umfasst die Schließeinheit neben einer festen auch eine bewegliche Aufspannplatte, welche auf einem Bock befestigt ist, der auf Führungen hin- und herschiebbar beweglich angeordnet ist. Zwischen dem Bock und den Führungen ist vorzugsweise eine hydrostatische Lagerung angeordnet. Eine Ausbildung der Lagerung ist nicht dargestellt.

Die DE 1 904 998 zeigt eine Schmiedepresse, bei der ein Schlitten auf einem Gestell hin- und herbeweglich angeordnet und mittels eines hydrostatischen Lagers gelagert ist. Die hydrostatischen Lager umfassen Hydraulikaustrittsbereiche, Rücklaufnuten und Vakuumnuten. Die Rücklaufnuten sind in der Regel offen ausgebildet, so dass das Druckfluid zumindest an bestimmten Stellen an die Außenumgebung austreten kann. Damit kommt es zu Verunreinigungen im Bereich der Schmiedepresse.

Die US 3,903,993 beschreibt eine hydrostatische Lagerung für einen Schlitten einer Presse. Dabei ist ein Schlitten in einem Rahmen geführt, und zur Lagerung des Schlittens auf und im Rahmen sind hydrostatische Lage vorgesehen. Eine Ausführungsform eines Lagers umfasst eine Ausnehmung aus der ein Hydraulikfluid austritt. Diese Ausnehmung ist von einer Hydraulikrückführnut umgeben. Jeweils zwei Hydraulikrückführnuten sind über eine Verbindungsnut gekoppelt, welche sich über den Zwischenraum der beiden hydrostatischen Lager erstreckt. Mittels dieser Verbindungsnut wird eine Aufrechterhaltung des Ölfilmes über den Zwischenraum sichergestellt. Jedoch wird mit dieser Maßnahme auch ein Austritt von Hydraulikfluid an die Außenumgebung akzeptiert.

Als weitere Dokumente, die sich mit hydrostatischen Lagern bei Pressen befassen, sind auf die EP 1 375 121 A2 sowie die US 4,048,841 allgemein hinzuweisen.

Aufgabe der vorliegenden Erfindung ist es, eine Schließeinheit derart auszubilden, dass eine konstant geringe Reibung auch bei langsamen Verfahrgeschwindigkeiten der beweglichen Formaufspannplatte sichergestellt ist.

Diese Aufgabe wird durch die im Patentanspruchs 1 genannten Merkmale vorrichtungsmäßig sowie durch die im Anspruch 14 genannten Merkmale verfahrensmäßig gelöst.

Aufgrund der zumindest während der Verfahrbewegung der beweglichen Formaufspannplatte erzeugten hydrostatischen Lagerung, ist es einerseits möglich, die Reibung zwischen der beweglichen Formaufspannplatte und dem Rahmenelement, auf dem sich die bewegliche Formaufspannplatte bewegt, nahezu konstant niedrig zu halten, insbesondere unabhängig von der Bewegungsgeschwindigkeit der Formaufspannplatte. Damit kann auch bei langsamen Geschwindigkeiten der Kraftaufwand für die Bewegung der beweglichen Formaufspannplatte gering gehalten werden, wodurch sich als Folge Fehlfunktionen - insbesondere sicherheitsrelevanter Art - in hervorragender Weise detektieren lassen. Als hydrostatische Lagerung wird dabei eine hydraulische Lagerung gesehen, die auch im statischen Zustand der Formaufspannplatte erzeugt oder erzeugbar ist. Im wesentlichen befindet sich die bewegliche Formaufspannplatte während der Bewegung auf einem "Polster" eines Hydraulikfluids, welches zwischen der beweglichen Formaufspannplatte und dem Rahmenelement ausgebildet ist.

Das Rahmenelement umfasst eine Gleitplatte, die wiederum auf einem Maschinengestell angeordnet ist. Auf der Gleitplatte ist eine Gleitleiste beweglich angeordnet. Die Gleitleiste ist mittelbar oder unmittelbar mit der beweglichen Formaufspannplatte fest verbunden. Zwischen der Gleitleiste und der Gleitplatte wird dann die hydrostatische Lagerung aufgebaut. Auch Gleitleiste ist dabei weit auszulegen und betrifft allgemein das Element welches unmittelbar auf der Gleitplatte gleitet.

Beim Aufbau der hydrostatischen Lagerung wird im Endeffekt ein Hydraulikmittel mit Druck beaufschlagt, wodurch sich ein Druckpolster zwischen der beweglichen Formaufspannplatte und dem Rahmenelement bzw. der Gleitleiste und der Gleitplatte bildet. Auf diesem Druckpolster kann nun die Verschiebung in reibungsarmer Weise und mit geschwindigkeitsunabhängigem Reibwert durchgeführt werden, wobei die Formaufspannplatte wie auf einem Polster "schwebt".

Für die hydrostatische Lagerung ist eine Hydraulikzuführeinrichtung sowie eine Hydraulikabführeinrichtung angeordnet, insbesondere auf Seiten der beweglichen Formaufspannplatte. Räumlich zwischen der Hydraulikzuführeinrichtung und der Hydraulikabführeinrichtung findet ein Hydraulikaustausch statt, der sich andererseits zwischen der Gleitplatte und der zu lagernden Formaufspannplatte, insbesondere der Gleitleiste, erstreckt.

Die Hydraulikmittelaustrittsöffnung, welche gleitplattenseitig in der Gleitleiste angeordnet ist, ist umfangsmäßig um eine Hydraulikmitteleintrittsöffnung angeordnet ist, die sich ebenfalls zur Gleitplatte hin in der Gleitleiste erstreckt. Die Hydraulikmittelaustrittsöffnung kann dabei beispielsweise mit scheibenförmiger Dimensionierung ausgebildet sein, wobei in dieses Volumen eine Hydraulikversorgungsleitung mündet. Die Hydraulikmitteleintrittsöffnung kann beispielsweise kreisringförmig ausgebildet sein und mit einer Hydraulikrückführleitung verbunden sein.

Um ein Austreten des Hydraulikfluids an die Außenumgebung zu verhindern, wirkt ein Dichtelement, welches in der Hydraulikmitteleintrittsöffnung zum Abdichten des Raumes zwischen der Gleitleiste und der Gleitplatte ausgebildet ist.

Aufgrund der konstruktiven Ausgestaltung ergibt sich zwischen der Hydraulikmitteleintrittsöffnung und der Hydraulikmittelaustrittsöffnung sowie zwischen der Gleitleiste und der Gleitplatte eine Drosselstelle, deren Dimension im Betreib durch den vorgegebenen Volumenstrom und die Pumpencharakteristik (Druckaufbauvermögen) definiert ist.

Die Hydraulikzuführeinrichtung ist zur Hydraulikversorgung vorzugsweise mit einer Hydraulikpumpe gekoppelt.

Das "Polster' kann aber über verschiedene Mittel erzeugt werden. Eine Möglichkeit mit einem hydraulischen Fluid wäre die Anordnung eines Druckkolbens in der Gleitleiste oder auf die Gleitleiste wirkend, welcher bei dessen Betätigung ein Hydraulikfluid beaufschlagt und zwischen die Gleitleiste und die Gleitplatte befördert.

Eine besonders bevorzugte Ausführungsform der vorliegenden Erfindung ergibt sich dann, wenn die Hydraulikpumpe als Volumenstrompumpe mit einstellbarem Volumenstrom ausgebildet ist. In diesem Fall regelt sich das Maß, mit welchem sich die Formaufspannplatte von dem Rahmenelement abhebt, automatisch. Vorgegeben und gewährleistet wird jeweils ein konstanter Volumenstrom zwischen Hydraulikzuführeinrichtung und Hydraulikabführeinrichtung. Ist nun der Strömungsquerschnitt zwischen der Gleitleiste und der Gleitplatte zu groß (aufgrund eines zu hohen Abhebens), so verringert sich der Druck und der Abstand zwischen Formaufspannplatte und Rahmenelement verringert sich. Ist der Abstand zu gering (aufgrund eines zu dichten Aufliegens), so erhöht sich der Druck und der Abstand zwischen beweglicher Formaufspannplatte und Rahmenelement erhöht sich wiederum. Auf diese Weise wird mit einem vorgegebenen konstanten Volumenstrom ein definierter Abstand zwischen der Formaufspannplatte und dem Rahmenelement bzw. zwischen der Gleitleiste und der Gleitplatte vorgegeben. Die Hydraulikpumpe bzw. Hydraulikpumpen lassen sich beispielsweise mit einem Motor antreiben, wobei ein Motor für eine Hydraulikpumpe oder für eine Gruppe von Hydraulikpumpen vorgesehen sein kann.

Natürlich können die Hydraulikmitteleintrittsöffnungen und Hydraulikmittelaustrittsöffnungen auch in anderer Weise ausgebildet sein, beispielsweise mit kreisringförmiger Hydraulikmittelaustrittsöffnung und zentraler Hydraulikmitteleintrittsöffnung. Auch können andere Geometrien gewählt werden. In diesem Zusammenhang ist lediglich wichtig, dass es zu einem Fluidaustausch zwischen Hydraulikmittelaustrittsöffnung und Hydraulikmitteleintrittsöffnung kommt, wobei der Fluidstrom zwischen Formaufspannplatte und Rahmenelement bzw. Gleitleiste und Gleitplatte zu einem Hydraulikpolster führt, welches gegenüber der Außenumgebung abgedichtet ist. Bei der oben beschriebenen Ausführungsform mit kreisringförmig ausgebildeter Hydraulikmitteleintrittsöffnung kann als Dichtelement eine Ringdichtung in die Ausnehmung eingebracht sein.

Je nach vorgegebenen Volumenstrom hebt sich die bewegliche Formaufspannplatte unterschiedlich hoch ab.

Um bei der hydrodynamischen Lösung eine Hydraulikdruckvorspannung im Rücklaufkreis zu erzeugen, ist ein federbeaufschlagtes Rückschlagventil im Hydraulikrückführleitungskreis vorgesehen. Dabei definiert die Federcharakteristik die Hydraulikdruckvorspannung in diesem Rücklaufbereich.

Um sicherzustellen, dass durch jedes einzelne hydraulische Lager der gleiche Hydraulikvolumenstrom fließt, werden stromaufwärts einer jeden hydraulischen Lagerung separate Hydraulikstromregler angeordnet.

Eine bewegliche Formaufspannplatte ist üblicherweise auf zwei Seiten gelagert und besitzt bei der vorliegenden Erfindung somit auf beiden Seiten eine hydrostatische Lagerung. In Verschieberichtung gesehen können, je nach Größe der beweglichen Formaufspannplatte, zwei oder mehrere hydraulische Lagerungen vorgesehen sein. Ist an der beweglichen Formaufspannplatte ein Gleitschuh zur weiteren Abstützung angeordnet, so kann eine hydraulische Lagerung sowohl unmittelbar unter der Formaufspannplatte wie auch unterhalb des Gleitschuhs angeordnet sein.

Bei dem Verfahren zum Betrieb der erfindungsgemäßen Schließeinheit ist es nicht unbedingt erforderlich, die hydrostatische Lagerung fortwährend aufrechtzuerhalten. Vielmehr reicht es auch, die hydrostatische Lagerung jeweils nur für den Zeitraum der Plattenbewegung zu erzeugen. Während des Einspritzvorgangs selbst sowie des sich daran anschließenden Nachdruck- und Aushärtevorgangs, welcher bei großen Teilen einige Zeit in Anspruch nehmen kann, ist die Aufrechterhaltung der hydrostatischen Lagerung nicht notwendig. In diesem Fall könnte die hydrostatische Lagerung abgeschaltet werden, wodurch sich nach dem Auflösen des entsprechenden Druckpolsters die Formaufspannplatte unmittelbar auf das Rahmenelement absenkt bzw. die Gleitleiste unmittelbar auf der Gleitplatte zum Liegen kommt.

Bei einem erfindungsgemäßen Verfahren könnte daher zumindest kurz vor dem Verschieben der beweglichen Formaufspannplatte ein Hydraulikdruck (auch Pneumatikdruck) in der hydrostatischen Lagerung aufgebaut werden und zwar derart, dass die bewegliche Formaufspannplatte geringfügig vom Rahmenelement abgehoben wird. Anschließend wird die bewegliche Formaufspannplatte verschoben (geöffnet oder geschlossen). Danach kann der Druck für die hydrostatische Lagerung wieder abgebaut werden, um ihn dann kurz vor dem Verschieben der beweglichen Formaufspannplatte erneut aufzubauen.

Die vorliegende Erfindung wird nachfolgend anhand eines Ausführungsbeispiels und mit Bezug auf die beiliegenden Zeichnungen näher erläutert. Die Zeichnungen zeigen in:
- **Fig. 1a:**: eine schematische Darstellung einer hydraulischen Schaltung für eine er- findungsgemäße Schließeinheit,
- **Fig. 1b:**: eine Detailschnittansicht einer hydrostatischen Lagerung für die bewegli- che Formaufspannplatte einer erfindungsgemäßen Schließeinheit,
- **Fig. 1c:**: eine schematische Darstellung einer Gleitleiste für eine erfindungsgemäße Schließeinheit von unten,
- **Fig. 2:**: eine weitere Detailschnittquefschnittsansicht einer hydrostatischen Lage- rung für eine erfindungsgemäße Schließeinheit senkrecht zur Verschiebe- richtung und
- **Fig. 3:**: eine schematische Teildarstellung einer beweglichen Formaufspannplatte für eine Schließeinheit nach dem Stand der Technik.

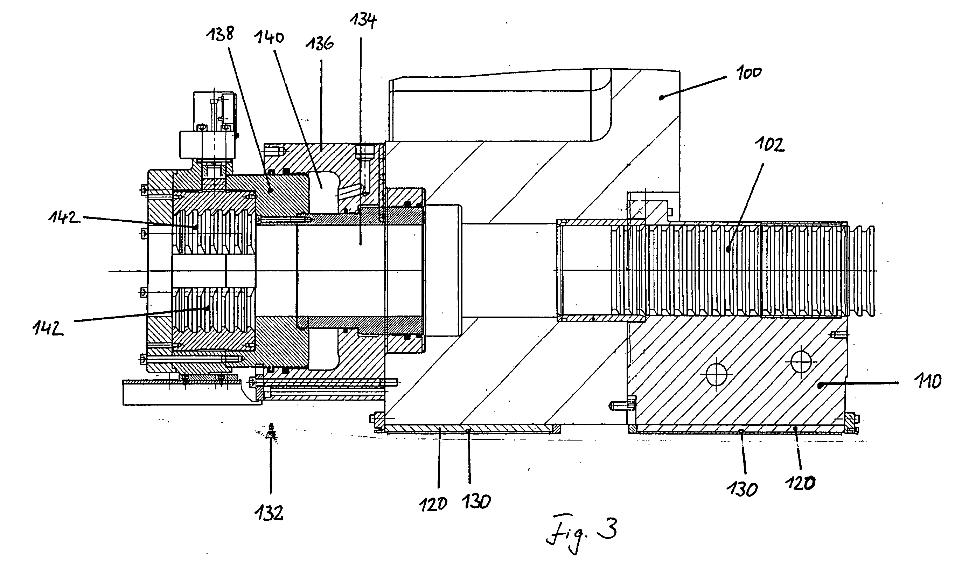

Zunächst soll mit Bezug auf Fig. 3 die herkömmliche hydrodynamische Lagerung einer bewegliche Formaufspannplatte bei einer Schließeinheit erläutert werden. Eine bewegliche Formaufspannplatte 100 ist in Fig. 3 nur mit einem Schnitt durch einen unteren Teil dargestellt. Werkzeugseitig schließt sich an die bewegliche Formaufspannplatte 100 auf jeder Lagerseite ein Gleitschuh 110 an (vorliegend nur ein Gleitschuh dargestellt), der zum weiteren Abstützen der Formaufspannplatte, insbesondere bei schweren Formwerkzeugen, dient. Sowohl die bewegliche Formaufspannplatte 100 wie auch der Gleitschuh 110 sind auf einen Gleitblech eines Maschinenbetts (nicht näher dargestellt) aufgenommen und geführt, so dass die bewegliche Formaufspannplatte 100 zusammen mit dem Gleitschuh 110 hin und her verschoben werden kann.

Sowohl an der beweglichen Formaufspannplatte 100 wie auch an dem Gleitschuh 110 sind unten Gleitleisten 120 zum unmittelbaren Kontakt mit den vorgenannten Gleitblechen dargestellt. Die Gleitleisten 120 weisen Schmiernuten 130 auf, über die Schmiermittel zwischen die Gleitleisten 120 und die Gleitbleche eingebracht werden kann.

Durch den Gleitschuh 110 und die bewegliche Formaufspannplatte 100 erstreckt sich in einer Öffnung ein Zugholm 102, der an einer (nicht dargestellten) Seite fest mit einer festen Formaufspannplatte verbunden ist und auf der anderen Seite ein freies Ende 134 besitzt. Ein Teil des Zugholms 102 ist mit Eingriffsnuten ausgebildet. Bei einer vollständigen Schließeinheit sind zwei, drei oder vier Zugholme an den jeweiligen Ecken der Schließeinheit vorgesehen. Jedem Zugholm 102 ist eine Verriegelungs- und Schließeinrichtung 132 zugeordnet. Die Verriegelungs- und Schließeinrichtung 132 umfasst einen Schließteil, der als Kernelement zwei Verriegelungsbacken 142 aufweist, welche radial zum Holm geöffnet und geschlossen werden können. Überdies umfasst der Schließteil der Verriegelungs- und Schließeinrichtung 132 einen an der beweglichen Formaufspannplatte befestigten Hydraulikzylinder 136 und einen integral mit der Verriegelungseinheit ausgebildeten Hydraulikkolben 138. Zwischen dem Hydraulikzylinder 136 und dem Hydraulikkolben 138 ist ein Arbeitsraum 140 ausgebildet, in dem über eine Hydraulikbohrung ein Druckfluid eingebracht werden kann.

In Fig. 3 befindet sich die bewegliche Formaufspannplatte im geöffneten Zustand. Soll nun die bewegliche Formaufspannplatte 100 geschlossen werden, so wird sie über einen nicht dargestellten Hydraulikantrieb die Formaufspannplatte (in der Figur) nach rechts bewegt, wodurch sich relativ gesehen der Zugholm 102 durch die Formaufspannplatte 100 bewegt. Nach Beendigung der Zufahrbewegung sind die beiden Verriegelungsbacken 142 im Nutbereich des Holms 102 positioniert. Anschließend werden die beiden Verriegelungsbacken 142, welche sich in Fig. 3 im geöffneten Zustand befinden, zusammengefahren und greifen dann in den Nuten des Zugholms 102 ein. Nach dieser Verriegelung wird im Arbeitsraum 140 ein Hydraulikdruck eingebracht, der zum Schließkraftaufbau dient und die bewegliche Werkzeugplatte gegenüber der festen Werkzeugplatte anpresst.

Bei der Bewegung der beweglichen Formaufspannplatte 100 wird aufgrund des zwischen den Gleitleisten 120 und den Gleitblechen eingebrachten Schmiermittels eine hydrodynamische Lagerung erzeugt, welche jedoch in ihren Reibungseigenschaften geschwindigkeitsabhängig ist.

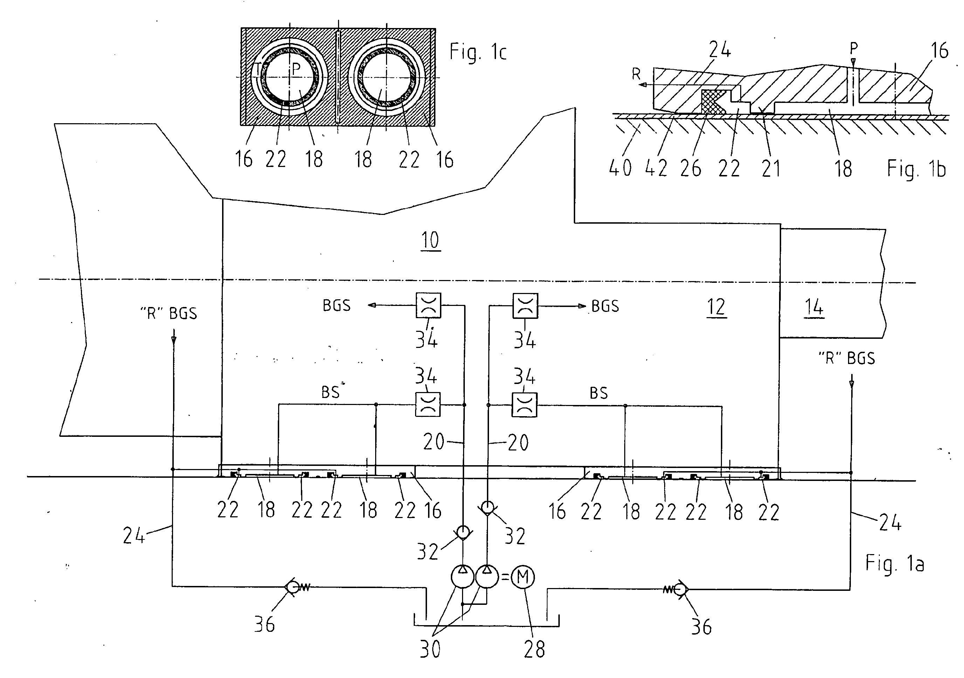

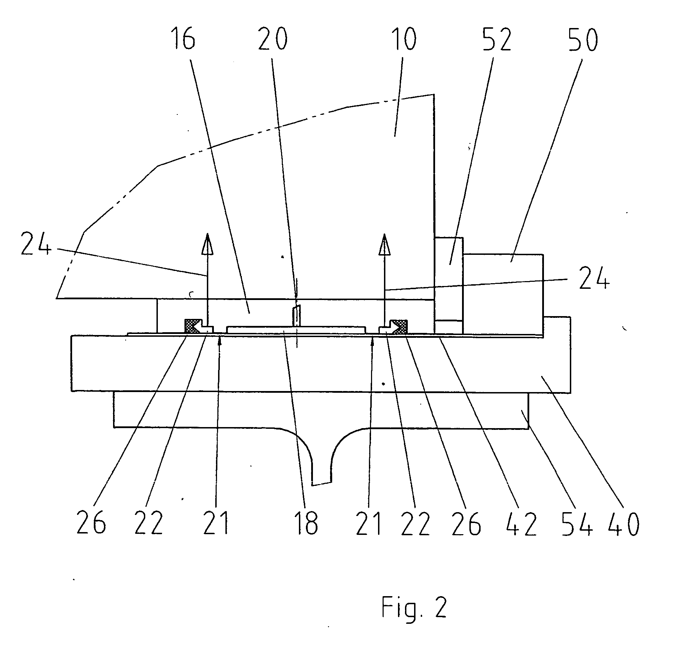

Um eine solche geschwindigkeitsabhängige Reibung zu vermeiden ist erfindungsgemäß zwischen der Formaufspannplatte und dem Rahmenelement eine hydrostatische Lagerung ausgebildet. Diese hydrostatische Lagerung wird in einem konkreten Ausführungsbeispiel anhand der Figuren 1a-1c und 2 erläutert.

Die Fig. 2 zeigt ähnlich wie die Fig. 1b eine schematische Schnittdarstellung durch den Bereich einer hydrostatischen Lagerung. Dabei ist die Fig. 1b eine Ansicht von der Seite und die Fig. 2 eine Schnittdarstellung quer zur Schließrichtung dargestellt.

Vorliegend ist eine Lagerplatte 40 auf einer Abstützung 54 angeordnet, insbesondere angeschweißt. Die Abstützung 54 ist dabei Teil eines nicht weiter dargestellten Maschinenbetts. Die Abstützung 54 und die Lagerplatte 40 sind Teil des Rahmenelements. Die Lagerplatte 40 besitzt eine gehärtete Oberfläche 42 sowie seitlich eine parallel zur Öffnungs- und Schließbewegung verlaufende nasenförmig nach oben vorstehende Führungsleiste (nicht näher bezeichnet).

Eine bewegliche Formaufspannplatte 10 ist vorliegend nur mit einer unteren Ecke in Fig. 2 angedeutet. Eine spiegelsymmetrische Ausbildung findet sich an der gegenüberliegenden unteren Ecke der beweglichen Formaufspannplatte 10 wieder.

An der Unterseite der beweglichen Formaufspannplatte 10 sind auf jeder Seite zwei Gleitleisten 16 angeordnet. Jede Gleitleiste 16 liegt dabei unmittelbar auf der gehärteten Oberfläche 42 der zugehörigen Lagerplatte 40 auf. In jeder Gleitleiste 16 sind (vergleiche Fig. 1 c) zwei in Öffnungs- und Schließrichtung beabstandete kreisscheibenförmige Ausnehmungen 18 an der Unterseite vorgesehen. In diese kreisscheibenförmigen Ausnehmungen 18 münden die Enden von Hydraulikzuführleitungen 20.

Koaxial sind die scheibenförmigen Ausnehmungen 18 von ringförmigen Ausnehmungen 22 umgeben, welche ebenfalls lagerplattenseitig offen sind. Der Ringraum mündet in eine Hydraulikabführleitung 24, welche jeweils über ein federbelastetes Rückschlagventil 36 in einen Auffangbehälter führen.

An beiden Außenseiten entlang der Schließeinheit verlaufen feste Führungsleisten 50, über welche - unter Zwischenschaltung einer Bronzeleiste - die Gleitleisten 16, und damit die bewegliche Formaufspannplatte 40, seitlich nach außen fixiert ist. Durch diese seitliche Fixierung links und rechts der Schließeinheit ist eine vollständige lineare Führung gewährleistet.

Wie bereits erwänt ist spiegelbildlich zur Fig. 2 eine analoge Vorrichtung auf der anderen Unterseite der beweglichen Formaufspannplatte vorgesehen, so dass die Formaufspannplatte 10 auf zwei solchen Längsführungen verschieblich gelagert ist.

Im Ringraum 22 ist eine Ringdichtung 26 eingesetzt, die eine Abdichtung zwischen der Gleitleiste 16 und der Lagerplatte 40 sicherstellt.

Bei der vorwiegend die hydraulischen Schaltung darstellende Fig. 1 a ist ein Gleitschuh 12 integral mit der beweglichen Formaufspannplatte 10 ausgebildet. Der Gleitschuh 12 dient insbesondere zur weiteren Abstützung, falls ein schweres Werkzeug auf die Formaufspannplatte 10 montiert ist. Durch die Formaufspannplatte 10 erstrecken sich - schematisch angedeutet - Holme 14, von denen in Fig. 1a nur einer von vier zu sehen ist.

Aus Fig. 1a ist weiter zu erkennen, dass ein Motor 28 vorgesehen ist, der vorliegend zwei Pumpen 30 antreibt. Die beiden Pumpen 30 sind mit den Hydraulikzuführleitungen 20 verbunden, wobei zwischen jeder Hydraulikzuführleitung und jeweils einer Gleitleiste Strömungsregler 34 zwischengeschaltet sind. Die Strömungsregler 34 stellen sicher, dass jeweils eine gleiche Menge von Hydraulikfluid zu einer Gleitleiste 16 verbracht wird.

Vorliegend sind vier Gleitleisten 16 vorgesehen, nämlich eine Gleitleiste 16 auf der Bedienerseite (Fig. 1 a) unmittelbar unter der beweglichen Formaufspannplatte , eine Gleitleiste auf der Bedienerseite (Fig. 1 a) unterhalb des Gleitschuhs 12 und jeweils die gleiche Anzahl von Gleitleisten auf der sogenannten Bediengegenseite, also der gegenüberliegenden Seite (nicht dargestellt). Es ist darauf hinzuweisen, dass bei der vorliegenden Ausführungsform die Unterseite der Gleitleisten 16 - bis auf die scheibenförmige Ausnehmung 18 und den Ringraum 22 - vollkommen planausgebildet ist.

Nachfolgend soll nun die Wirkungsweise der erfindungsgemäßen Schließeinheit mit hydrostatischer Lagerung erläutert werden. In geöffnetem Zustand der beweglichen Formaufspannplatte 10 ist zunächst die hydrostatische Lagerung nicht aufgebaut und der Motor 28 wird nicht betrieben. Soll nun die bewegliche Formaufspannplatte 10 verfahrern werden, so wird kurz vor dem Beginn der Verfahrbewegung die Motorpumpen-Kombination 28, 30 betrieben, wodurch ein konstanter Volumenstrom über die Pumpen 30 gefördert wird. Durch die Stromregler 34 wird sichergestellt, dass auch zu den jeweiligen Gleitleisten 16 konstante Volumenströme gelangen.

Das geförderte Hydraulikfluid tritt nun aus den Zuführleitungen 20 in die zylinderförmige Ausnehmungen 18 aus, wobei sich der Hydraulikdruck kontinuierlich bis zu einem bestimmten Wert erhöht. Überschreitet der Hydraulikdruck ein durch das Gewicht der beweglichen Formaufspannplatte definiertes Maß, so hebt sich diese geringfügig ab, wodurch eine Strömungsverbindung zwischen jeder scheibenförmigen Ausnehmung 18 und dem diese umgebenden Ringraum 22 über jeweiligen ringförmigen Drosselspalt 21 hergestellt wird. Das Hydraulikfluid fließt nun über diesen Drosselspalt 21 in den Ringraum ab und wird von dort über die Hydraulikabführleitung 24 zum Auffangbehälter zurück geleitet. Durch das federvorgespannte Rückschlagventil 36 wird sichergestellt, dass in der Rückführleitung stets ein bestimmter Druck (Vorspanndruck) aufrechterhalten wird.

Aufgrund der konstanten Volumenstromförderung der Pumpen 30 stellt sich ein bestimmter Abstand zwischen den Gleitleiste 16 und den Lagerplatten 40 ein, welcher der Höhe des Drosselspalts 21 entspricht. Um ein Austreten des Hydraulikfluids an die Außenumgebung zu verhindern, wirkt die Ringdichtung 26. Eine solche Dichtung wird beispielsweise von der Firma Simrit als Nutring mit U-Feder angeboten.

Würde nun der Abstand zwischen den Gleitleisten 16 und den Lagerplatten 40 zu groß werden, so würde der Strömungsquerschnitt der Drosselstellen zunehmen, wodurch mehr Hydraulikfluid von der kreisscheibenförmigen Ausnehmung 18 zum Ringraum 22 strömen könnte. Als Folge davon erniedrigt sich der Druck und die Gleitleiste 16 sinkt zusammen mit der beweglichen Formaufspannplatte 10 wieder etwas nach unten. Wird der Drosselquerschnitt zu gering, so erhöht sich der Druck in der kreisförmigen Ausnehmung und die Gleitleiste 16 samt darauf angeordneter beweglicher Formaufspannplatte 10 hebt sich wieder etwas. Auf diese Weise kann mittels einer Pumpe 30 mit konstantem Volumenstrom die Höhe des hydraulischen Fluidpolsters bestimmt werden. Überdies ist radial außerhalb des Drosselbereichs 21 lediglich der durch die Feder im Rückschlagventil 36 bestimmte Fluiddruck aufgebaut. Damit wird verhindert, dass auf die Dichtung 26 ein übermäßiger Druck wirkt. Mit einer solchermaßen ausgestatteten hydrostatischen Lagerung schwebt die Formaufspannplatte auf den so gebildeten hydraulischen Polstern, was zu einem einheitlichen Reibungswert bei einem Verschieben der beweglichen Werkzeugaufspannplatte unabhängig von deren Geschwindigkeit führt. Die dabei benötigte Pumpe kann klein dimensioniert sein. Auch bei großen Maschinen können Drücke im Bereich von 40 bar ausreichend sein. Die Fördermenge kommt auf den Drosselquerschnitt an und hängt damit von der Höhe ab, mit welcher die Formaufspannplatte vom Rahmenelement abgehoben wird. Da hier einige Mikrometer ausreichen, kann auch der Volumenstrom in Grenzen gehalten werden.

Natürlich lässt sich die vorliegende Erfindung auch auf andere Arten realisieren. Ausschlaggebend ist lediglich, dass zwischen der beweglichen Formaufspannplatte und dem Rahmenelement, auf dem die bewegliche Formaufspannplatte gelagert ist, eine oder mehrere hydrostatische Lagerung ausgebildet wird, die einen unmittelbaren Kontakt zwischen den zu lagernden Teilen vermeidet und eine geschwindigkeitsunabhängige Lagerung sicherstellt.

Zusammenfassend kann gesagt werden, dass die bewegliche Werkzeugaufspannplatte mit Gleitplatten auf einer Führungsbahn des Maschinenbetts ruht. Die Gleitplatten sind zur Ausbildung von Druckfedern ausgestattet, welche wiederum von ringförmigen Rücklaufkanälen umschlossen werden können, die wiederum mittels Dichtungen abgedichtet sind. Die Druckfelder werden von separaten Pumpen und Mengenteilern mit einem Druckmittel (z.B. Drucköl) versorgt. Die Druckfelder sind über einen umlaufenden Drosselsteg von den Rücklaufkanälen getrennt.

Vor dem Start der Bewegung der beweglichen Formaufspannplatte wird zunächst die Druckversorgung der Druckfelder aktiviert. Mittels des Mengenteilersystem wird jedem Druckfeld die gleiche Ölmenge zugemessen. Der Druck in den Druckfeldern steigt entsprechend der Last des Plattengewichts und des Werkzeuggewichts an. Übersteigt die Druckkraft in den Druckfeldern die Gewichtskraft, wird die bewegliche Werkzeugaufspannplatte im Mikrometerbereich angehoben, wobei das überschüssige Druckfluid über den ringförmigen Drosselquerschnitt in den Rücklauf strömt. Unterschiedliche Lastkollektive werden über Druckfelder automatisch ausgeglichen. Während der Bewegung der beweglichen Formaufspannplatte "schwimmt" die Platte auf den Druckfeldern, wodurch die Reibung unabhängig von der Geschwindigkeit der Platte sichergestellt wird. Nach dem Ende der Bewegung wird die Druckversorgung abgeschaltet und die bewegliche Formaufspannplatte ruht wieder auf den Gleitplatten.

## Patentansprüche

1. Schließeinheit für eine Spritzgießmaschine, mit zumindest einer beweglichen Formaufspannplatte (10), welche auf einem Rahmenelement beweglich gelagert ist, wobei zwischen der Formaufspannplatte (10) und dem Rahmenelement zumindest eine hydrostatische Lagerung zur leichteren Hin- und Herverschieblichkeit ausgebildet oder ausbildbar ist, das Rahmenelement zumindest eine Gleitplatte (40) umfasst und oberhalb jeder Gleitplatte (40) zumindest eine an der Formaufspannplatte montierte Gleitleiste (16) vorgesehen ist,
**dadurch gekennzeichnet,**
**dass** die hydrostatische Lagerung in Form eines oder mehrerer Druckkissen zwischen der Gleitplatte und der Gleitleiste aufbaubar ist,
**dass** an der zur Gleitplatte (40) hin gerichteten Seite einer jeden Gleitleiste (16) zumindest eine Hydraulikmittelaustrittsöffnung (18) vorgesehen ist, die umfangsmäßig von einer ebenfalls zur Gleitplatte (40) hin geöffneten Hydraulikmitteleintrittsöffnung (21) vollständig umgeben ist,
**dass** für jede hydrostatische Lagerung eine Hydraulikzuführeinrichtung (20, 34) sowie eine Hydraulikabführeinrichtung (24, 36) vorgesehen ist, wobei zwischen der Hydraulikzuführeinrichtung (20, 34) und der Hydraulikabführeinrichtung (24, 36) ein Hydraulikaustausch stattfindet,
**dass** in der Hydraulikmitteleintrittsöffnung (22) ein Dichtelement (26) zum Abdichten eines Raumes zwischen der Gleitleiste (16) und der Gleitplatte (40) ausgebildet ist, wobei sich die Hydraulikmittelaustrittsöffnung (18) radial innerhalb des abgedichteten Raumes befindet und
**dass** bei aufgebauter hydrostatischer Lagerung zwischen der Hydraulikmittelaustrittsöffnung (18) und der Hydraulikmitteleintrittsöffnung (22) eine Drosselstelle (21) zwischen der Gleitleiste (16) und der Gleitplatte (40) ausgebildet ist.

2. Schließeinheit nach Patentanspruch 1,
**dadurch gekennzeichnet,**
**dass** die Hydraulikzuführeinrichtung (20, 34) mit einer Hydraulikpumpe (30) gekoppelt ist.

3. Schließeinheit nach Patentanspruch 2,
**dadurch gekennzeichnet,**
**dass** die Hydraulikpumpe (30) als Volumenstrompumpe mit einstellbarem Volumenstrom ausgebildet ist.

4. Schließeinheit nach Patentanspruch 2 oder 3,
**dadurch gekennzeichnet,**
**dass** zumindest ein Motor vorgesehen ist, der jeweils eine oder mehrere Hydraulikpumpen (30) antreibt.

5. Schließeinheit nach einem der Patentansprüche 1 bis 4,
**dadurch gekennzeichnet,**
**dass** die Hydraulikmittelaustrittsöffnung (18) als scheibenförmige Ausnehmung ausgebildet ist, in die eine Hydraulikversorgungsleitung (20) mündet.

6. Schließeinheit nach Patentanspruch 5,
**dadurch gekennzeichnet,**
**dass** die Hydraulikmitteleintrittsöffnung (22) als Kreisringausnehmung ausgebildet ist, die mit einer Hydraulikrückführleitung (24) verbunden ist.

7. Schließeinheit nach einem der Patentansprüche 1 bis 6,
**dadurch gekennzeichnet,**
**dass** das Dichtelement eine Ringdichtung (26) ist.

8. Schließeinheit nach einem der vorhergehenden Patentansprüche,
**dadurch gekennzeichnet,**
**dass** in der Hydraulikrückführleitung (24) ein Rückschlagventil (36) angeordnet ist.

9. Schließeinheit nach einem der vorhergehenden Patentansprüche,
**dadurch gekennzeichnet,**
**dass** in der Hydraulikversorgungsleitung (20) stromaufwärts jeder hydrostatischen Lagerung ein Hydraulikstromregler (34) vorgesehen ist.

10. Schließeinheit nach einem der vorhergehenden Patentansprüche,
**dadurch gekennzeichnet,**
**dass** die bewegliche Formaufspannplatte (10) auf zwei Seiten gelagert ist und auf beiden Seiten eine hydrostatische Lagerung vorgesehen ist.

11. Schließeinheit nach einem der vorhergehenden Patentansprüche,
**dadurch gekennzeichnet,**
**dass** auf jeder Lagerseite der beweglichen Formaufspannplatte (10) in Verschieberichtung beabstandet zwei oder mehrere hydrostatische Lagerungen vorgesehen sind.

12. Schließeinheit nach einem der vorhergehenden Patentansprüche,
**dadurch gekennzeichnet**,
an der beweglichen Formaufspannplatte (10), integriert mit dieser oder separat befestigt, ein ebenfalls gelagerter Gleitschuh (12) zur weiteren Abstützung angeordnet ist und hydrostatische Lagerungen sowohl unmittelbar unterhalb der beweglichen Formaufspannplatte (10) wie auch unter dem Gleitschuh (12) angeordnet sind.

13. Schließeinheit nach einem der vorhergehenden Patentansprüche,
**dadurch gekennzeichnet,**
**dass** für jede hydrostatische Lagerstelle oder für eine Gruppe von Lagerstellen jeweils eine Hydraulikpumpe vorgesehen ist.

14. Verfahren zum Betrieb einer Schließeinheit, die nach einem der vorstehenden Patentansprüche 1 bis 13 ausgebildet ist,
**dadurch gekennzeichnet,**
- **dass** vor dem Verschieben der beweglichen Formaufspannplatte (10) ein Druck in der hydrostatischen Lagerung derart aufgebaut wird,
- **dass** die Formaufspannplatte geringfügig vom Rahmenelement abgehoben wird,
- dass die bewegliche Formaufspannplatte (10) verschoben wird, und
- **dass** der Druck für die hydrostatische Lagerung nach der Verschiebung wieder abgebaut wird.

15. Verfahren nach Patentanspruch 14,
**dadurch gekennzeichnet,**
**dass** jede hydrostatische Lagerung jeweils mit einer vorbestimmten Hydraulikmittelmenge pro Zeiteinheit versorgt wird.

16. Verfahren nach Patentanspruch 14 oder 15,
**dadurch gekennzeichnet,**
**dass** mittels des Rückschlagventils (36) eine Hydraulikdruckvorspannung im Rücklaufsystem eingestellt wird.

## Claims

1. Closing unit for an injection moulding machine, with at least one movable mould clamping plate (10) which is movably mounted on a frame element, wherein between the mould clamping plate (10) and the frame element at least one hydrostatic bearing is constructed or is able to be constructed for easier displaceability to and fro, the frame element comprises at least one slide plate (40) and above each slide plate (40) at least one slide rail (16) is provided, mounted on the mould clamping plate,
**characterized in that**
the hydrostatic bearing is able to be constructed in the form of one or more pressure pads between the slide plate and the slide rail,
that on the side of each slide rail (16) directed towards the slide plate (40) at least one hydraulic means outlet opening (18) is provided, which is completely surrounded peripherally by a hydraulic means inlet opening (21) likewise opened towards the slide plate (40),
that for each hydrostatic bearing a hydraulic supply arrangement (20, 34) and a hydraulic removal arrangement (24, 36) is provided, wherein a hydraulic exchange takes place between the hydraulic supply arrangement (20, 34) and the hydraulic removal arrangement (24, 36),
that in the hydraulic means inlet opening (22) a sealing element (26) is constructed for sealing a space between the slide rail (16) and the slide plate (40), wherein the hydraulic means outlet opening (18) is situated radially inside the sealed space and
that with the assembled hydrostatic bearing between the hydraulic means outlet opening (18) and the hydraulic means inlet opening (22) a restriction (21) is formed between the slide rail (16) and the slide plate (40).

2. Closing unit according to Claim 1,
**characterized in that**
the hydraulic supply arrangement (20, 34) is coupled with a hydraulic pump (30).

3. Closing unit according to Claim 2,
**characterized in that**
the hydraulic pump (30) is constructed as a volume flow pump with adjustable volume flow.

4. Closing unit according to Claim 2 or 3,
**characterized in that**
at least one motor is provided, which respectively drives one or more hydraulic pumps (30).

5. Closing unit according to any of Claims 1 to 4,
**characterized in that**
the hydraulic means outlet opening (18) is constructed as a disc-shaped recess, into which a hydraulic supply duct (20) opens.

6. Closing unit according to Claim 5,
**characterized in that**
the hydraulic means inlet opening (22) is constructed as a circular ring recess, which is connected with a hydraulic return duct (24).

7. Closing unit according to any of Claims 1 to 6,
**characterized in that**
the sealing element is a ring seal (26).

8. Closing unit according to any of the preceding claims,
**characterized in that**
a non-return valve (36) is arranged in the hydraulic return duct (24).

9. Closing unit according to any of the preceding claims,
**characterized in that**
a hydraulic flow regulator (34) is provided in the hydraulic supply duct (20) upstream of each hydrostatic bearing.

10. Closing unit according to any of the preceding claims,
**characterized in that**
the movable mould clamping plate (10) is mounted on two sides and a hydrostatic bearing is provided on both sides.

11. Closing unit according to any of the preceding claims,
**characterized in that**
two or more hydrostatic bearings are provided, spaced apart in displacement direction, on each bearing side of the movable mould clamping plate (10).

12. Closing unit according to any of the preceding claims,
**characterized in that**
on the movable mould clamping plate (10), integrated with the latter or fastened separately, a likewise mounted slide shoe (12) is arranged for further support, and hydrostatic bearings are arranged both directly beneath the movable mould clamping plate (10) and also under the slide shoe (12).

13. Closing unit according to any of the preceding claims,
**characterized in that**
for each hydrostatic bearing point or for a group of bearing points respectively a hydraulic pump is provided.

14. Method for the operation of a closing unit which is constructed according to any of the preceding Claims 1 to 13,
**characterized in that**
- before the displacement of the movable mould clamping plate (10) a pressure is built up in the hydrostatic bearing such that
- the mould clamping plate is raised slightly from the frame element,
- the movable mould clamping plate (10) is displaced, and
- the pressure for the hydrostatic bearing is decreased again after the displacement.

15. Method according to Claim 14,
**characterized in that**
each hydrostatic bearing is supplied respectively with a predetermined quantity of hydraulic means per unit of time.

16. Method according to Claim 14 or 15,
**characterized in that**
a hydraulic pressure pre-stressing is set in the return system by means of the non-return valve (36).

## Revendications

1. Unité de fermeture pour une machine à mouler par injection, comprenant au moins un plateau porte-outillage (10) mobile, qui est logé de façon mobile sur un élément de châssis, au moins un logement hydrostatique étant réalisé ou pouvant être réalisé entre le plateau porte-outillage (10) et l'élément de châssis pour faciliter la mobilité aller et retour, lequel élément de châssis comprend au moins un plateau de glissement (40) et au moins une baguette de glissement (16) montée sur le plateau porte-outillage étant prévue au-dessus de chaque plateau de glissement (40),
**caractérisée en ce que**
le logement hydrostatique peut être installé sous la forme d'un ou de plusieurs coussins de pression entre le plateau de glissement et la baguette de glissement,
**en ce qu'**il est prévu sur le côté, dirigé vers le plateau de glissement (40), de chaque baguette de glissement (16) au moins une ouverture de sortie d'agent hydraulique (18) qui est complètement entourée sur le pourtour par une ouverture d'entrée d'agent hydraulique (21) également ouverte en direction du plateau de glissement (40),
**en ce qu'**il est prévu pour chaque logement hydrostatique un dispositif d'arrivée hydraulique (20, 34) ainsi qu'un dispositif d'évacuation hydraulique (24, 36), un échange hydraulique ayant lieu entre le dispositif d'arrivée hydraulique (20, 34) et le dispositif d'évacuation hydraulique (24, 36),
**en ce qu'**un élément d'étanchéité (26) est formé dans l'ouverture d'entrée d'agent hydraulique (22) pour l'étanchéité d'un espace entre la baguette de glissement (16) et le plateau de glissement (40), l'ouverture de sortie d'agent hydraulique (18) se trouvant radialement à l'intérieur de l'espace étanchéifié et
**en ce que**, lorsque le logement hydraulique est mis en place entre l'ouverture de sortie d'agent hydraulique (18) et l'ouverture d'entrée d'agent hydraulique (22), un point d'étranglement (21) est formé entre la baguette de glissement (16) et le plateau de glissement (40).

2. Unité de fermeture selon la revendication 1,
**caractérisée en ce que**
le dispositif d'arrivée hydraulique (20, 34) est couplé avec une pompe hydraulique (30).

3. Unité de fermeture selon la revendication 2,
**caractérisée en ce que**
la pompe hydraulique (30) est conçue comme pompe à débit volumétrique avec un débit volumétrique réglable.

4. Unité de fermeture selon la revendication 2 ou 3,
**caractérisée en ce que**
il est prévu au moins un moteur qui entraîne respectivement une ou plusieurs pompes hydrauliques (30).

5. Unité de fermeture selon l'une quelconque des revendications 1 à 4,
**caractérisée en ce que**
l'ouverture de sortie d'agent hydraulique (18) est conçue sous forme d'évidemment en forme de disque dans lequel débouche une conduite d'alimentation hydraulique (20).

6. Unité de fermeture selon la revendication 5,
**caractérisée en ce que**
l'ouverture d'entrée d'agent hydraulique (22) est conçue sous forme d'évidement circulaire qui est relié à une conduite de recyclage hydraulique (24).

7. Unité de fermeture selon l'une quelconque des revendications 1 à 6,
**caractérisée en ce que**
l'élément d'étanchéité est un joint annulaire (26).

8. Unité de fermeture selon l'une quelconque des revendications précédentes,
**caractérisée en ce que**
un clapet antiretour (36) est disposé dans la conduite de recyclage hydraulique (24).

9. Unité de fermeture selon l'une quelconque des revendications précédentes,
**caractérisée en ce que**
un régulateur de flux hydraulique (34) est prévu dans la conduite d'alimentation hydraulique (20) en amont de chaque logement hydrostatique.

10. Unité de fermeture selon l'une quelconque des revendications précédentes,
**caractérisée en ce que**
le plateau porte-outillage (10) mobile est monté sur deux côtés et un logement hydrostatique est prévu sur les deux côtés.

11. Unité de fermeture selon l'une quelconque des revendications précédentes,
**caractérisée en ce que**
deux ou plusieurs logements hydrostatiques sont prévus sur chaque côté de palier du plateau porte-outillage (10) mobile espacés dans le sens de déplacement.

12. Unité de fermeture selon l'une quelconque des revendications précédentes,
**caractérisée en ce que**
un patin de glissement (12) également monté sur paliers pour le soutien ultérieur est disposé sur le plateau porte-outillage (10) mobile, intégré avec celui-ci ou fixé séparément, et des logements hydrauliques sont disposés aussi bien directement au-dessous du plateau porte-outillage (10) mobile que au-dessous du patin de glissement (12).

13. Unité de fermeture selon l'une quelconque des revendications précédentes,
**caractérisée en ce que**
à chaque fois une pompe hydraulique est prévue pour chaque point d'appui hydrostatique ou pour un groupe de points d'appui.

14. Procédé pour le fonctionnement d'une unité de fermeture, qui est conçue selon l'une quelconque des revendications 1 à 13 précédentes,
**caractérisé en ce que**,
- avant le déplacement du plateau porte-outillage (10) mobile, une pression est établie dans le logement hydrostatique de telle sorte que
- le plateau porte-outillage est soulevé légèrement de l'élément de châssis,
- que le plateau porte-outillage (10) mobile est déplacé, et
- **en ce que** la pression pour le logement hydrostatique est supprimée à nouveau après le déplacement.

15. Procédé selon la revendication 14,
**caractérisé en ce que**
chaque logement hydrostatique est alimenté respectivement avec une quantité prédéfinie d'agent hydraulique par unité de temps.

16. Procédé selon la revendication 14 ou 15,
**caractérisé en ce que**
une pré-tension de la pression hydraulique dans le système de recyclage est réglée au moyen du clapet antiretour (36).
